# EUROPÄISCHE PATENTSCHRIFT

(11) **EP 3 772 917 B1**
(45) Veröffentlichungstag und Bekanntmachung des Hinweises auf die Patenterteilung: **02.03.2022**
(21) Anmeldenummer: 18796575.1
(22) Anmeldetag: 22.10.2018
(51) Int. Cl.: A01K 5/02, A01K 15/02

(54) **TIERFUTTERSPENDER**
ANIMAL FEED DISPENSER
DISTRIBUTEUR D'ALIMENTS POUR ANIMAUX

(30) Priorität: 06.04.2018 AT 502822018
(43) Veröffentlichungstag der Anmeldung: 17.02.2021
(73) Patentinhaber: WINGOLD GmbH, 4600 Wels (AT)
(72) Erfinder: HOLZBAUR, Petra, 3400 Klosterneuburg (AT)
(74) Vertreter: Moser Götze & Partner Patentanwälte mbB
(86) Internationale Anmeldenummer: PCT/AT2018/060252
(87) Internationale Veröffentlichungsnummer: WO 2019/191791

(56) Entgegenhaltungen:
- DE-U1- 29 708 195
- DE-U1-202007 002 067
- DE-U1-202008 011 742
- US-A1- 2011 005 469

## Beschreibung

Die Erfindung betrifft einen Tierfutterspender, insbesondere für Pferde, umfassend ein nach unten hin offenes im Wesentlichen senkrecht ausgerichtetes Rohr mit zumindest einer im oberen Abschnitt des Rohrs angeordneten Einfüllöffnung für Tierfutter.

### Stand der Technik

Beschäftigungselemente für Tiere, die mit einer Futtergabe kombiniert sind, sind in vielfachen Ausführungsformen bekannt. Während bei vielen dieser Geräte für den Kleintierbereich alleinig ein gewisser Trainingseffekt im Vordergrund steht, geht es bei jenen für Pferde hauptsächlich darum, die längeren Aufenthaltszeiten der Tiere in den Boxen erträglich zu gestalten. Pferde neigen dazu, bei längeren Aufenthaltszeiten in den Boxen durch Langeweile ausgelöste Verhaltensstörungen, wie beispielsweise Weben oder Koppen, zu entwickeln. Um dem vorzubeugen, wurde eine Reihe von Einrichtungen entwickelt, welche dem Pferd die Möglichkeit bieten, sich zu beschäftigen.

In der US 2011005469 A beispielsweise ist eine zylindrische Vorrichtung beschrieben, welche in einer Pferdebox aufgehängt werden kann, und die am Mantel eine Vielzahl von Ausnehmungen aufweist, in welchen kleine Futterstücke platziert werden können. Ein Problem, das dabei auftritt ist, dass alle platzierten Futterstücke oder Leckerlis gleichzeitig für das Pferd zugänglich sind, und man somit keine Kontrolle darüber hat, wie schnell das Pferd die einzelnen Futterstücke zu sich nimmt. Die angebotenen Futterstücke, wie beispielsweise Äpfel oder auch streugutförmiges Kraftfutter oder Müsli, erzeugen beim Pferd eine gesteigerte Motivation, da es sich um Leckereien handelt. Gleichzeitig, wie beim Menschen zumeist auch, sind diese Leckereien aber nur in Maßen gesund und sollten entsprechend nicht in großen Mengen auf einmal gefressen werden. Bei Kraftfutter im Speziellen kommt es weniger auf die Menge an sich an, sondern darauf, dass es hier prinzipiell wünschenswert ist, wenn das Pferd das Kraftfutter möglichst langsam zu sich nimmt. Nur so kann sichergestellt werden, dass es ausreichend gut eingespeichelt und verdaut wird, wodurch Koliken vorgebeugt wird. Sofern die Vorrichtung, wie in der oben genannten Druckschrift, keine zusätzlichen Einrichtungen aufweist, ergibt sich jedoch keine Möglichkeit, in Abwesenheit des Pferdehalters die Abgabe des Futters bzw. der Leckereien zu steuern. In der DE 29708195 U ist beispielsweise auch eine solche Vorrichtung beschrieben.

Eine weitere derartige Vorrichtung ist beispielsweise in der DE 202007002067 U offenbart. Hier ist ein unten geschlossenes und mit seitlichen Löchern versehenes Rohr schwenkbar an einer Wand befestigt. Das Rohr kann beim Anstoßen durch das Pferd pendeln und schüttgutförmiges Futter kann durch die seitlichen Löcher austreten. Obwohl hier nicht das ganze Futter auf einmal zugänglich ist, ist diese Vorrichtung allein für schüttgutförmiges Futter tauglich. Durch den sehr simplen Aufbau ist auch der Spieleffekt für das Pferd gering, da ein simples Anstoßen ausreicht und jede einzelne Aktion sofort belohnt wird.

Eine Vorrichtung, welche speziell für das Training von Hunden entwickelt wurde, ist beispielsweise in der DE 202008011742 U offenbart. Hierbei handelt es sich um einen Spielturm in Form eines hohlen Rohres mit einer im unteren Mantelbereich vorgesehen Öffnung für die Ausgabe von Futter. Im Inneren des Rohres sind mehrere Trennebenen eingeschoben, welche über Schlaufen an der Außenseite vom Hund herausgezogen werden können. Einzelne im Inneren platzierte Futterstücke können so sequenziell abgegeben werden oder aber, sofern nur ein Futterstück ganz oben eingefüllt ist, erst nach mehrmaligen Handlungen durch das Tier freigegeben werden. Nachteilig bei dieser Ausführung ist, dass bei einer Füllung mit mehreren Futterstücken, diese nur dann sequenziell abgegeben werden, wenn das Tier die Ebenen in der richtigen Reihenfolge herauszieht. Sofern aber beispielsweise zuerst die oberen Ebenen entfernt werden und erst zuletzt die unterste, dann kommen alle Futterstücke gemeinsam aus der Ausgabeöffnung, was wieder zu dem unerwünschten Effekt führt, dass das Tier zu viele Futterstücke auf einmal zu sich nimmt.

### Darstellung der Erfindung

Aufgabe der vorliegenden Erfindung ist es nun, einen Tierfutterspender zu schaffen, welcher die oben genannten Nachteile beseitigt. Es soll ermöglicht werden, dass mehrere Portionseinheiten von festem Futter oder auch von schüttgutförmigem Futter in der Vorrichtung gelagert und jeweils einzeln dosiert abgebbar sind. Die Abgabe erfolgt nach spielerischem Beschäftigen des Tiers mit dem Spender, wobei nicht jede einzelne Handlung zu einer Futterabgabe führen soll, wodurch einerseits das Interesse des Tieres geweckt bleibt und andererseits die Abgabe der Poritonseinheiten über einen längeren Zeitraum erfolgt.

Diese Aufgabe wird durch die vorliegende Erfindung dadurch gelöst, dass zumindest zwei quer zur Längsachse des Rohres das Rohr im Inneren durchragende elastische Seile übereinander angeordnet sind, wobei oberhalb von jedem Seil ein Freiraum verbleibt, welcher jeweils nur die Aufnahme einer einzelnen Portionseinheit des Tierfutters erlaubt, und wobei jedes Seil mit einem Ende eines zugehörigen Zugelements verbunden ist, welches im Wesentlichen normal zum jeweiligen elastischen Seil über eine Öffnung in der Rohrwandung nach außen geführt ist, wobei am außerhalb des Rohrs liegenden Ende des Zugelements ein Beißelement befestigt ist. Eine Portionseinheit kann im Falle von festem Futter beispielsweise ein Apfel sein. In der minimalsten Ausführung des Futterspenders beinhaltet dieser folglich im gefüllten Zustand zwei Äpfel in den jeweils vorgesehenen Freiräumen, jeweils zurückgehalten durch die elastischen Seile. In der Praxis wird der Tierfutterspender jedoch größer dimensioniert sein und mehrere elastische Seile und darüber angeordnete Freiräume beinhalten, beispielsweise vier, fünf, sechs oder sieben. Je mehr Unterteilungen durch elastische Seile vorgesehen sind, desto länger kann sich das Tier mit der Vorrichtung beschäftigen, wobei die Futterabgabe nicht linear mit der Anzahl der Aktionen des Tieres ansteigt, da es zunehmend schwieriger wird, Portionseinheiten aus weiter oben gelegenen Unterteilungen freizusetzen. Zieht das Tier an einem Beißelement, so wird durch das Zugelement das elastische Seil zur Seite bewegt und gibt damit genügend Querschnitt im Inneren des Rohrs frei, damit eine über dem Seil gelagerte Portionseinheit nach unten fallen kann. Dies jedoch nur dann, wenn es sich entweder um die unterste Portionseinheit handelt, oder der Freiraum unterhalb des jeweiligen Seils frei ist. Befindet sich dort bereits eine Portionseinheit, so kann die nächste nicht weit genug nach unten gleiten und wird beim Loslassen der Zugeinheit durch das elastische Seil weiterhin im ursprünglichen Freiraum festgehalten.

Dabei ist es ein weiteres vorteilhaftes Merkmal, dass die Öffnung für das Zugelement einen Durchmesser aufweist, der geringer ist als der Durchmesser des elastischen Seils. Dadurch kann auch bei sehr starkem Zug des Tieres am Zugelement das elastische Seil nicht in die Öffnung gezogen werden und dort verklemmen oder beschädigt werden. Die Funktionssicherheit der Vorrichtung wird dadurch verbessert.

Gemäß einem zusätzlichen vorteilhaften Merkmal ist es vorgesehen, dass in der Rohrwandung Sichtöffnungen vorgesehen sind, welche die Erfassung des Füllstandes in den jeweiligen Freiräumen oberhalb von jedem der elastischen Seile erlauben. Dies ermöglicht es dem Tierhalter auf einen Blick zu erkennen, in welchen Freiräumen noch Futterportionen vorhanden sind, was das Nachfüllen erleichtert. Es können entweder mehrere kleine Öffnungen oder Fenster in der Rohrwandung vorgesehen sein oder aber beispielsweise ein länglicher Schlitz, durch welchen alle Freiräume über den elastischen Seilen einsehbar sind.

Gemäß einer alternativen Ausführungsform der Erfindung ist es vorgesehen, dass im Inneren des Rohres ein in Längsrichtung verlaufender flexibler Schlauch angeordnet ist, und dass neben jedem elastischen Seil ein parallel zu diesem angeordnetes Widerlagerelement angeordnet ist, wobei der flexible Schlauch zwischen den elastischen Seilen und den jeweiligen Widerlagerelementen verläuft und in der Ausgangsstellung zwischen diesen jeweils abgeklemmt ist. Mittels dieser Ausführungsform ist es möglich, auch schüttgutförmiges Futter, wie beispielsweise Kraftfuttermischungen, Müsli oder dergleichen, über den Futterspender portionsweise und über einen längeren Zeitraum zuzuführen. In den Schlauchabschnitten in den Freiräumen über dem jeweiligen abgeklemmten Abschnitt kann sich jeweils eine Portionseinheit von schüttgutförmigem Futter sammeln. Die Funktionsweise für das Tier bleibt gleich. Es zieht an dem Beißelement und dadurch wird das elastische Seil vom Widerlagerelement weggezogen, wodurch der abgeklemmte Schlauchabschnitt freigegeben wird und das Futter nach unten rutschen kann. Auch hier kann das Futter nur weiterrutschen, wenn der darunterliegende Schlauchabschnitt nicht bereits zur Gänze mit Futter gefüllt ist bzw. wenn es sich um den untersten Abschnitt handelt, welcher das Futter zum Tier hin abgibt. In der Regel wird immer nur ein kleiner Teil einer Portionseinheit freigegeben und kann in den darunter liegenden Schlauchabschnitt gelangen oder zum Tier abgegeben werden.

Es ist ferner ein vorteilhaftes Merkmal, dass mit dem oberen Ende des flexiblen Schlauches ein erweiterter Aufnahmeraum für einen Futtervorrat verbunden ist. Je nachdem wie groß die Vorrichtung ausgestaltet ist, kann an der Oberseite ein entsprechender Vorratsbehälter vorgesehen sein. Im einfachsten Fall handelt sich bei dem Aufnahmeraum um den obersten erweiterten Abschnitt des flexiblen Schlauchs, welcher im Inneren des Rohrs fixiert ist. Es kann aber auch ein trichterförmig zulaufender Vorratsbehälter an den Schlauch angeschlossen sein, welcher dann den entsprechenden Aufnahmeraum für den Futtervorrat bildet.

Es ist ein weiteres vorteilhaftes Merkmal, dass das Widerlagerelement durch einen starren Bolzen oder durch ein elastisches Seil gebildet ist. Diese Varianten haben sich hinsichtlich einer einfachen und kostengünstigen Herstellung des Futterspenders als vorteilhaft erwiesen.

Schließlich ist es ein zusätzliches vorteilhaftes Merkmal, dass jedem Zugelement ein Dämpfungselement aus einem elastischen lebensmittelechten Material zugeordnet ist, wobei das Dämpfungselement in der unbelasteten Ausgangsstellung zwischen dem Beißelement und der äußeren Wand des Rohrs im Bereich des Zugelements angeordnet ist. Beim Ziehen und anschließenden Loslassen des Beißelements kommt es aufgrund der elastischen Seile im Inneren des Rohres zu einem Zurückschnalzen der Beißelemente gegen die äußere Rohrwand. Dies verursacht einerseits Lärm und kann zu einer rascheren Abnutzung sowohl der Rohrwand als auch des Beißelements führen. Das eingesetzte Dämpfungselement dient als Stoßdämpfer, was sowohl den Lärm als auch die Abnutzung minimiert. In einer möglichen Ausführung kann das Dämpfungselement beispielsweise ein Stück eines elastischen Schlauches sein, welches das Zugelement umgibt und somit in der Ausgangslage als Abstandshalter zwischen dem Beißelement und dem Rohr dient.

### Kurze Beschreibung der Zeichnungen

Die Erfindung wird nun in größerem Detail anhand von Ausführungsbeispielen sowie mit Hilfe der beiliegenden Figuren beschrieben. Dabei zeigen
Fig. 1 einen schematischen Längsschnitt durch eine erste Ausführungsart der Erfindung,
Fig. 2 einen schematischen Querschnitt durch die Ausführungsart aus Fig. 1 in Ausgangsstellung,
Fig. 3 einen schematischen Querschnitt durch die Ausführungsart aus Fig. 1 mit betätigtem Zugelement,
Fig. 4 einen schematischen Längsschnitt durch eine zweite Ausführungsart der Erfindung,
Fig. 5 einen schematischen Querschnitt durch die Ausführungsart aus Fig. 4 in Ausgangsstellung und
Fig. 6 einen schematischen Querschnitt durch die Ausführungsart aus Fig. 4 mit betätigtem Zugelement.

### Weg(e) zur Ausführung der Erfindung

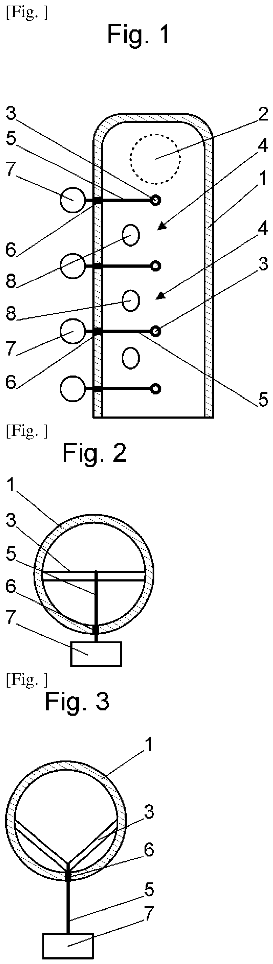

In Fig. 1 ist schematisch eine erste Ausführungsform eines erfindungsgemäßen Futterspenders dargestellt, welcher beispielsweise für die Abgabe von Äpfeln vorgesehen ist. Der Futterspender umfasst ein längliches Rohr 1, welches nach unten hin offen ist. Das Rohr kann aus Holz oder einem anderen festen Material, welches für das Tier unschädlich ist, gefertigt sein. Alternativ können die äußeren Teile des Futterspenders oder zumindest Abschnitte davon auch aus verzehrbarem Material, wie beispielsweise einer Leckmasse, gefertigt sein. Am oberen Ende befindet sich eine Einfüllöffnung 2. Das Rohr 1 wird in der Box beispielsweise an den Gitterstäben mittels Gurten senkrecht befestigt, sodass die Beißelemente 7 zum Pferd ausgerichtet sind.

Im gezeigten Ausführungsbeispiel handelt es sich um eine Vorrichtung mit einer Aufnahmekapazität für vier Äpfel. Zum Befüllen schiebt man jeweils einen Apfel in die Einfüllöffnung 2 und zieht dann über die Beißelemente 7 an den Zugelementen 5, um die elastischen Seile 3 zur Seite zu ziehen und den Apfel nach unten zu befördern. Die Freiräume 4 zwischen den elastischen Seilen 3 sind dabei genau so hoch, dass nur ein einzelner Apfel darin Platz findet. Über die Sichtöffnungen 8 kann man die Position der einzelnen Äpfel erfassen, was den Befüllvorgang erleichtert. Je nach Position der Sichtfenster, können diese auch einen einfachen Zugang zu den Zugelementen 5 und den elastischen Seilen 3 erlauben, wodurch der Tierhalter gegebenenfalls einzelne Seile 3 und Zugelemente 5 einsetzen oder entfernen kann, wenn er beispielsweise die Portionsgrößen anpassen möchte.

Sobald das Tier nun mit der Vorrichtung zu spielen beginnt, versucht es die Beißelemente 7 mit den Lippen und Zähnen zu greifen und zieht somit in willkürlicher Reihenfolge an den Zugelementen 5. Die Ausgangsstellung eines elastischen Seils 3 ist in der Fig. 2 dargestellt. Es ragt mittig durch den Innenraum des Rohrs 1, wodurch der darüber befindliche Apfel nicht weiter nach unten rutschen kann. Zieht nun das Tier an dem betreffenden Beißelement 7, so tritt bei vollständigem Ausziehen die Stellung gemäß Fig. 3 ein. Nun ist genug Platz gegeben, damit der Apfel weiterbefördert werden kann, sofern in dem darunterliegenden Freiraum 4 nicht bereits ein Apfel vorhanden ist. Sollte der Freiraum 4 schon belegt sein, dann Stapeln sich die Äpfel übereinander und beim Loslassen der Zugeinheit 5 kehrt das elastische Seil 3 in seine Ausgangslage zurück und hält den oberen Apfel damit weiterhin in seiner Position fest.

Damit bei zu starkem Zug am Beißelement 7 die Vorrichtung nicht beschädigt wird, bzw. das elastische Seil in die Öffnung 6 für das Zugelement 5 hineingezogen und verklemmt wird, ist es vorgesehen, dass die Öffnung 6 einen geringeren Durchmesser aufweist, als die Dicke des elastischen Seils 3.

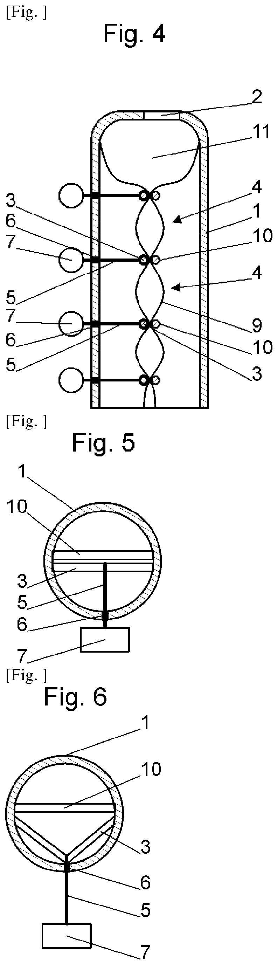

In den Fig. 4 bis 6 ist eine alternative Ausführungsform eines erfindungsgemäßen Futterspenders für schüttgutförmiges Futter dargestellt. Das Rohr 1, sowie die einzelnen Abschnitte mit elastischen Seilen 3, Freiräumen 4, Zugelementen 5 und Beißelementen 7 sind gleich aufgebaut wie bei der Ausführungsform aus den Fig. 1 bis 3. Am oberen Ende des Rohres 1 wird ein flexibler Schlauch 9 an der Innenwandung des Rohrs 1 montiert. Dadurch wird auch die Einfüllöffnung 2 anders ausgebildet, um ein einfaches Befüllen von oben zu ermöglichen. Der oberste Abschnitt des flexiblen Schlauchs ist dabei etwas erweitert und bildet einen Aufnahmeraum 11 für einen Futtervorrat.

Zusätzlich zu den elastischen Seilen 3 sind parallel zu diesen angeordnete Widerlagerelemente 10 angeordnet. Der im Inneren des Rohrs 1 verlaufende flexible Schlauch 9 wird dadurch jeweils zwischen den Widerlagerelementen 10 und den flexiblen Seilen 3 in einzelnen Sektionen abgeklemmt. In den Abschnitten des flexiblen Schlauchs 9, welche in den Freiräumen 4 liegen, können sich somit jeweils eine Portionseinheit an schüttgutförmigem Futter ansammeln. Durch Ziehen an den Zugelementen 5 rieseln diese Portionseinheiten schrittweise nach unten.

In Fig. 5 ist im Querschnitt ersichtlich, dass in der Ausgangsstellung das elastische Seil 3 am Widerlagerelement 10 anliegt, und der dazwischen befindliche flexible Schlauch 9 dadurch abgeklemmt ist. Wird nun über das Beißelement 7 das Zugelement 5 und damit das elastische Seil 3 zur Seite gezogen, wie dies in Fig. 6 dargestellt ist, so entsteht eine Durchtrittsöffnung für das schüttgutförmige Futter, um nach unten Durchzurieseln, sollte im Freiraum 4 darunter Platz vorhanden sein.

## Patentansprüche

1. Tierfutterspender, insbesondere für Pferde, umfassend ein nach unten hin offenes im Wesentlichen senkrecht ausgerichtetes Rohr (1) mit zumindest einer im oberen Abschnitt des Rohrs (1) angeordneten Einfüllöffnung (2) für Tierfutter, wobei zumindest zwei quer zur Längsachse des Rohres das Rohr (1) im Inneren durchragende elastische Seile (3) übereinander angeordnet sind, wobei oberhalb von jedem Seil (3) ein Freiraum (4) verbleibt, welcher jeweils nur die Aufnahme einer einzelnen Portionseinheit des Tierfutters erlaubt, und wobei jedes Seil (3) mit einem Ende eines zugehörigen Zugelements (5) verbunden ist, welches im Wesentlichen normal zum jeweiligen elastischen Seil (3) über eine Öffnung (6) in der Rohrwandung nach außen geführt ist, wobei am außerhalb des Rohrs (1) liegenden Ende des Zugelements (5) ein Beißelement (7) befestigt ist.

2. Tierfutterspender nach Anspruch 1, **dadurch gekennzeichnet, dass** die Öffnung (6) für das Zugelement (5) einen Durchmesser aufweist, der geringer ist als der Durchmesser des elastischen Seils (3).

3. Tierfutterspender nach Anspruch 1 oder 2, **dadurch gekennzeichnet, dass** in der Rohrwandung Sichtöffnungen (8) vorgesehen sind, welche die Erfassung des Füllstandes in den jeweiligen Freiräumen (4) oberhalb von jedem der elastischen Seile (3) erlauben.

4. Tierfutterspender nach einem der Ansprüche 1 bis 3, **dadurch gekennzeichnet, dass** im Inneren des Rohres (1) ein in Längsrichtung verlaufender flexibler Schlauch (9) angeordnet ist, **und dass** neben jedem elastischen Seil (3) ein parallel zu diesem angeordnetes Widerlagerelement (10) angeordnet ist, wobei der flexible Schlauch (9) zwischen den elastischen Seilen (3) und den jeweiligen Widerlagerelementen (10) verläuft und in der Ausgangsstellung zwischen diesen jeweils abgeklemmt ist.

5. Tierfutterspender nach Anspruch 4, **dadurch gekennzeichnet, dass** mit dem oberen Ende des flexiblen Schlauches (9) ein erweiterter Aufnahmeraum (11) für einen Futtervorrat verbunden ist.

6. Tierfutterspender nach Anspruch 4 oder 5, **dadurch gekennzeichnet, dass** das Widerlagerelement (10) durch einen starren Bolzen oder durch ein elastisches Seil gebildet ist.

7. Tierfutterspender nach einem der Ansprüche 1 bis 6, **dadurch gekennzeichnet, dass** jedem Zugelement (5) ein Dämpfungselement aus einem elastischen lebensmittelechten Material zugeordnet ist, wobei das Dämpfungselement in der unbelasteten Ausgangsstellung zwischen dem Beißelement (7) und der äußeren Wand des Rohrs (1) im Bereich des Zugelements (5) angeordnet ist.

## Claims

1. Animal feed dispenser, in particular for horses, comprising a substantially vertically oriented tube (1) open towards the bottom having at least one filling opening (2) for animal feed arranged in the upper section of the tube (1), wherein at least two elastic cables (3) protruding through the interior of the tube (1) transverse to the longitudinal axis of the tube are arranged one above the other, wherein a free space (4) remains above each cable (3) and permits the reception of only one individual unit portion of the animal feed, and wherein each cable (3) is connected to one end of an associated pulling element (5) which extends to the outside substantially normal to the respective elastic cable (3) via an opening (6) in the tube wall, wherein a biting element (7) is fastened to the end of the pulling element (5) located outside the tube (1).

2. Animal feed dispenser as claimed in claim 1, **characterised in that** the opening (6) for the pulling element (5) has a diameter which is smaller than the diameter of the elastic cable (3).

3. Animal feed dispenser as claimed in claim 1 or 2, **characterised in that** viewing openings (8) are provided in the tube wall which permit detection of the filling level in the respective free spaces (4) above each of the elastic cables (3).

4. Animal feed dispenser as claimed in any one of claims 1 to 3, **characterised in that** a flexible hose (9) extending in the longitudinal direction is arranged within the tube (1) and that, next to each elastic cable (3), an abutment element (10) parallel thereto is arranged, wherein the flexible hose (9) extends between the elastic cables (3) and the respective abutment elements (10) and is pinched off therebetween in the initial position.

5. Animal feed dispenser as claimed in claim 4, **characterised in that** an expanded reception space (11) for a feed supply is connected to the upper end of the flexible hose (9).

6. Animal feed dispenser as claimed in claim 4 or 5, **characterised in that** the abutment element (10) is formed by a rigid bolt or by an elastic cable.

7. Animal feed dispenser as claimed in any one of claims 1 to 6, **characterised in that** a damping element consisting of an elastic food-safe material is allocated to each pulling element (5), wherein the damping element is arranged in the unloaded initial position between the biting element (7) and the outer wall of the tube (1) in the region of the pulling element (5).

## Revendications

1. Distributeur d'aliments pour animaux, en particulier pour chevaux, ledit distributeur comprenant un tube (1) ouvert vers le bas, orienté sensiblement verticalement et comprenant au moins une ouverture (2) de remplissage d'aliments pour animaux ménagée dans la partie supérieure du tube (1), au moins deux cordes (3) élastiques saillant à l'intérieur à travers le tube (1) transversalement à l'axe longitudinal du tube étant disposées l'une au-dessus de l'autre, un espace libre (4) restant au-dessus de chaque corde (3), lequel espace permet seulement de recevoir une seule portion d'aliment pour animaux, et chaque corde (3) étant reliée à une extrémité d'un élément de traction associé (5) qui est guidé vers l'extérieur sensiblement perpendiculairement à la corde (3) élastique respective par une ouverture (6) ménagée dans la paroi de tube, un élément à mordre (7) étant fixé à l'extrémité de l'élément de traction (5) située à l'extérieur du tube (1).

2. Distributeur d'aliments pour animaux selon la revendication 1, **caractérisé en ce que** l'ouverture (6) destinée à l'élément de traction (5) a un diamètre qui est inférieur au diamètre de la corde (3) élastique.

3. Distributeur d'aliments pour animaux selon la revendication 1 ou 2, **caractérisé en ce que** des ouvertures de visualisation (8) sont prévues dans la paroi du tube, lesquelles permettent de détecter le niveau de remplissage dans les espaces libres (4) respectifs au-dessus de chacune des cordes (3) élastiques.

4. Distributeur d'aliments pour animaux selon l'une des revendications 1 à 3, **caractérisé en ce qu'**un tuyau flexible (9), s'étendant dans la direction longitudinale, est disposé à l'intérieur du tube (1), et **en ce qu'**un élément de butée (10) est disposé à côté de chaque corde (3) élastique parallèlement à celle-ci, le tuyau flexible (9) s'étendant entre les cordes (3) élastiques et les éléments de butée respectifs (10) et étant serré entre ceux-ci dans la position initiale.

5. Distributeur d'aliments pour animaux selon la revendication 4, **caractérisé en ce qu'**un espace de réception élargi (11) destiné à une réserve d'aliments est relié à l'extrémité supérieure du tuyau flexible (9).

6. Distributeur d'aliments pour animaux selon la revendication 4 ou 5, **caractérisé en ce que** l'élément de butée (10) est formé par un boulon rigide ou par une corde élastique.

7. Distributeur d'aliments pour animaux selon l'une des revendications 1 à 6, **caractérisé en ce qu'**à chaque élément de traction (5) est associé un élément amortisseur en un matériau élastique alimentaire, l'élément amortisseur étant disposé dans la position initiale non chargée entre l'élément à mordre (7) et la paroi extérieure du tube (1) dans la zone de l'élément de traction (5).
